# EUROPÄISCHE PATENTSCHRIFT

(11) **EP 3 204 665 B1**
(45) Veröffentlichungstag und Bekanntmachung des Hinweises auf die Patenterteilung: **24.02.2021**
(21) Anmeldenummer: 15774510.0
(22) Anmeldetag: 01.10.2015
(51) Int. Cl.: F16H 61/02, F16H 3/00, B60K 6/48, B60W 10/06, B60W 10/08, B60W 20/15, B60W 30/18, B60W 10/11, F16H 61/68

(54) **ANTRIEBSVORRICHTUNG FÜR EIN KRAFTFAHRZEUG**
DRIVE DEVICE FOR A MOTOR VEHICLE
DISPOSITIF D'ENTRAÎNEMENT POUR VÉHICULE AUTOMOBILE

(30) Priorität: 07.10.2014 DE 102014014848
(43) Veröffentlichungstag der Anmeldung: 16.08.2017
(73) Patentinhaber: Audi AG, 85045 Ingolstadt (DE)
(72) Erfinder: WINKLER, Josef, 85110 Kipfenberg (DE); VOGTHERR, Karin, 86668 Karlshuld (DE); WANSNER, Michael, 86529 Schrobenhausen (DE)
(74) Vertreter: Lehle, Josef
(86) Internationale Anmeldenummer: PCT/EP2015/001936
(87) Internationale Veröffentlichungsnummer: WO 2016/055145

(56) Entgegenhaltungen:
- DE-A1-102007 004 412
- DE-A1-102007 044 432
- DE-A1-102010 062 381
- US-A- 2 551 746

## Beschreibung

Die Erfindung betrifft ein hybridgetriebenes Kraftfahrzeug nach dem Oberbegriff des Patentanspruches 1.

Ein Kraftfahrzeug ist je nach Fahrsituation im Zugbetrieb, in dem das Kraftfahrzeug vom Antriebsmotor (Brennkraftmaschine und/oder Elektromaschine) angetrieben wird, oder in einem Schubbetrieb betreibbar, in dem das Kraftfahrzeug über die Fahrzeugräder angetrieben wird.

Bei einem Fahrzeug erfolgt im Schubbetrieb eine Schubabschaltung, in der zur Kraftstoffeinsparung keine Kraftstoffeinspritzung durchgeführt wird. In einem solchen Schubbetrieb schleppt das Fahrzeug den Antriebsstrang. Alle dynamischen Teile des Antriebsstrangs erzeugen ein Schleppmoment, das dem Antriebsmoment entgegenwirkt. Das Schleppmoment ist von der Brennkraftmaschinen-Drehzahl abhängig. Das heißt je geringer die Brennkraftmaschinen-Drehzahl ist, desto geringer ist auch das Schleppmoment. Zur Reduzierung des Schleppmomentes steuert daher im Schubbetrieb das Getriebesteuergerät das Automatikgetriebe auf einen hohen Fahrgang, bei dem die Brennkraftmaschine nur noch mit reduzierter Drehzahl dreht. Eine Antriebsvorrichtung mit einer solchen Schubhochschaltung ist zum Beispiel aus der DE 10 2013 200 502 A1 oder aus der DE 10 2010 041 324 A1 bekannt.

Aus der DE 2007 044 432 A1 ist ein Verfahren zur Steuerung eines automatisierten Stufenschaltgetriebes bekannt. Aus der US 2 551 746 A ist ein hydrodynamisch arbeitendes Getriebe bekannt.

Aus der DE 10 2010 062 381 A1 ist ein gattungsgemäßer Antriebsstrang und ein Verfahren zum Betreiben desselben bekannt. Aus der DE 10 2007 004 412 A1 ist ein weiterer Antriebsstrang bekannt.

Die die schaltbaren Fahrgänge bereitstellenden Übersetzungsstufen sind üblicherweise so bemessen, dass sich eine harmonische und gut fahrbare Gangabstufung und Ganganbindung an den jeweils nächsthöheren Fahrgang ergibt. Entsprechend sind die Stufensprünge in einem Stufensprungdiagramm oder in einem Gangabstufungsdiagramm auszulegen. Ein Stufensprung ist als der Quotient der Übersetzung eines Fahrganges zur Übersetzung des nächsthöheren Fahrgangs definiert. In gängiger Praxis ist der Stufensprung umso größer, je niedriger die Fahrgänge sind und pendelt sich bei den hohen Gängen häufig in einer Waagrechten ein. Die Motordrehzahldifferenz ist daher umso größer, je niedriger der Fahrgang ist.

In Übereinstimmung mit obiger Auslege-Praxis ist im Stand der Technik auch die Übersetzung des höchsten Fahrganges im Automatikgetriebe eingestellt, der im Schubbetrieb als Schubgang vom Getriebesteuergerät angesteuert wird, und zwar so, dass der Stufensprung vom zweithöchsten Fahrgang zum höchsten Fahrgang (das heißt dem Schubgang) gering ist, um im Zugbetrieb eine harmonische Ganganbindung zu gewährleisten. Jedoch sind in diesem Fall aufgrund des geringen Stufensprunges vom zweithöchsten Fahrgang zum höchsten Fahrgang (das heißt Schubgang) die in der Brennkraftmaschine erzeugten Schleppverluste nach wie vor noch hoch.

Eine weitere Reduzierung der Schleppverluste kann dadurch erzielt werden, dass die Brennkraftmaschine in den Schubphasen ausgeschaltet wird und die Kupplung zwischen der Brennkraftmaschine und dem Getriebe geöffnet wird. Zudem muss die Brennkraftmaschine bei Bedarf auch bei höheren Geschwindigkeiten wieder gestartet werden. Dies stellt eine enorme Belastung des elektrischen Bordnetzes dar. Aus Sicherheitsgründen benötigt man dafür eine redundante Energieversorgung (das heißt zwei Batterien, die voneinander entkoppelt sind). Außerdem sind während der Schubphase diverse Nebenaggregate, das heißt die Klimaanlage, die Unterdruckversorgung für die Bremse und dergleichen, deaktiviert. Soll während der Schubphase wieder beschleunigt werden, dauert es zudem sehr lange, bis die Brennkraftmaschine wieder kraftschlüssig mit dem Getriebe verbunden ist.

Bei hybridgetriebenen Kraftfahrzeugen mit einer Brennkraftmaschine und einer antreibenden Elektromaschine als zweite Antriebsquelle ist es zur Versorgung des elektrischen Bordnetzes bzw. zur Erzielung eines effizienten Rekuperationsbetriebs vorteilhaft, den Schubbetrieb und gegebenenfalls einen Bremsbetrieb des Kraftfahrzeugs mit möglichst geringer Bremswirkung durch die Brennkraftmaschine über die als Generator geschaltete Elektromaschine auszuführen. Auch hierzu ist es bei angekoppelter Brennkraftmaschine zweckmäßig, das Getriebe in einen höheren Fahrgang umzuschalten.

Die Aufgabe der Erfindung besteht darin, ein hybridgetriebenes Kraftfahrzeug mit einer Antriebsvorrichtung bereitzustellen, bei der ein im Wirkungsgrad verbesserter Schubbetrieb und/oder Bremsbetrieb des Kraftfahrzeugs hinsichtlich des Kraftstoffverbrauchs und/oder des Rekuperationsbetriebs erzielbar ist.

Die Aufgabe ist durch die Merkmale des Patentanspruches 1 gelöst. Vorteilhafte Weiterbildungen der Erfindung sind in den abhängigen Ansprüchen offenbart.

Gemäß dem kennzeichnenden Teil des Patentanspruches 1 weist das Getriebe zumindest eine, einen Schubgang bereitstellende Übersetzungsstufe auf, die im Zugbetrieb nicht vom Getriebesteuergerät aktiviert wird, sondern nur im Schubbetrieb, in dem das Fahrzeug die Brennkraftmaschine unter Aufbau eines das Antriebsmoment reduzierenden Schleppmoments schleppt. Da somit der Schubgang nur für den Schubbetrieb nutzbar ist, nicht jedoch für den Zugbetrieb, spielt eine harmonische Anbindung des Schubgangs an den nächstniedrigeren Gang keine Rolle. Bei der Auslegung der Übersetzung des Schubgangs kann der Fokus somit gezielt auf eine sehr starke Reduzierung der Brennkraftmaschinen-Drehzahl bis hin auf die Leerlaufdrehzahl oder darunter gerichtet werden.

Der Schubgang kann bei Schubbetrieb des Kraftfahrzeugs und bei höherer Geschwindigkeit geschaltet werden kann, wobei die Brennkraftmaschinen-Drehzahl auf die Leerlaufdrehzahl oder darunter absenkbar ist. Durch den erfindungsgemäßen Vorschlag gelingt es daher, auch im höheren Geschwindigkeitsbereich die kinetische Energie des Kraftfahrzeugs vermehrt zu nutzen, ohne jedoch die Brennkraftmaschine abzukoppeln oder stillzusetzen und ohne Vortrieb zu verlieren. Die Schubgang-Übersetzungsstufe senkt dabei wesentlich die Drehzahl der Brennkraftmaschine ab; bei niedrigeren Fahrzeuggeschwindigkeiten kann dies zudem durch die an sich bekannten Schubhochschaltungen über die Fahrgänge bewirkt werden.

Der Schubgang kann besonders bevorzugt betrachtet in einem Stufensprungdiagramm des Getriebes mit linearen oder abnehmenden Stufensprüngen auf einen größten Stufensprung ausgelegt werden, um eine wirksame Drehzahlabsenkung sicherzustellen. Dabei ist zu berücksichtigen, dass der Schubgang keinen harmonischen Übergang zu dem benachbarten, höchsten Fahrgang bilden muss, da er nur im Schubbetrieb bei höherer Fahrgeschwindigkeit und bevorzugt automatisiert eingesetzt wird.

In vorteilhafter Weiterbildung der Erfindung können zumindest zwei nicht als Fahrgänge verwendbare Schubgänge vorgesehen sein, die geschwindigkeitsabhängig so geschaltet werden, dass die Drehzahl der Brennkraftmaschine im Schubbetrieb über einen weiten Geschwindigkeitsbereich im Wesentlichen auf Leerlaufdrehzahl gehalten werden kann. Der Nutzeffekt ist damit weiter erhöht. Im hybridgetriebenen Kraftfahrzeug mit der Brennkraftmaschine und dem Getriebe wird der zumindest eine Schubgang dann geschaltet, wenn bei entsprechender Geschwindigkeit das Kraftfahrzeug über die Elektromaschine im Rekuperationsbetrieb gebremst wird.

Erfindungsgemäß ist im hybridgetriebenen Kraftfahrzeug, mit der Brennkraftmaschine, dem Getriebe mit mehreren Übersetzungsstufen und mit der Elektromaschine als zweite Antriebsquelle, das Getriebe mit zumindest einer nicht als Fahrgang verwendbaren Übersetzungsstufe bzw. einem Schubgang versehen, der im Schubbetrieb des Kraftfahrzeugs schaltbar ist und der im höheren Geschwindigkeitsbereich des Kraftfahrzeugs die Drehzahl der Brennkraftmaschine im Wesentlichen auf Leerlaufdrehzahl absenkt.

Des Weiteren kann über ein elektronisches Steuergerät im Schubbetrieb und gegebenenfalls Bremsbetrieb des Kraftfahrzeugs die Kraftstoffzufuhr zu Brennkraftmaschine unterbrochen und im höheren Geschwindigkeitsbereich des Kraftfahrzeugs der zumindest eine Schubgang geschaltet sein.

Schließlich können bei zumindest zwei nicht als Fahrgänge verwendbaren Schubgängen des Getriebes die Übersetzungsstufen so geschaltet sein, dass die Drehzahl der Brennkraftmaschine oberhalb der Einspritzgrenze für den Kraftstoff gehalten ist und/oder dass über das Steuergerät die drehzahlabhängige Einspritzgrenze reduziert ist. Dies hat den Vorteil, dass sehr weitgehend die Kraftstoffzufuhr unterbunden werden kann und dennoch ein dynamisch günstiger Übergang vom Schubbetrieb des Kraftfahrzeugs in den Antriebsbetrieb ausschließlich von der Brennkraftmaschine oder kombiniert mit der Elektromaschine sichergestellt ist.

Ein Ausführungsbeispiel der Erfindung ist im Folgenden anhand der beigefügten Zeichnung näher erläutert.

Es zeigen:
- Fig. 1: als Blockschaltbild ein Hybridantriebssystem für Kraftfahrzeuge mit einer Brennkraftmaschine, einem Getriebe und einer Elektromaschine als zweite Antriebsquelle, die über ein elektronisches Steuergerät gesteuert sind;
- Fig. 2 ein: beispielhaftes Stufensprungdiagramm der Übersetzungsstufen des Getriebes nach Fig. 1 mit mehreren Fahrgängen und einem Schubgang; und
- Fig. 3: ein Diagramm, das die Abhängigkeit der Schleppleistung (das heißt des Schleppmoments) von der Brennkraftmaschinen-Drehzahl veranschaulicht.

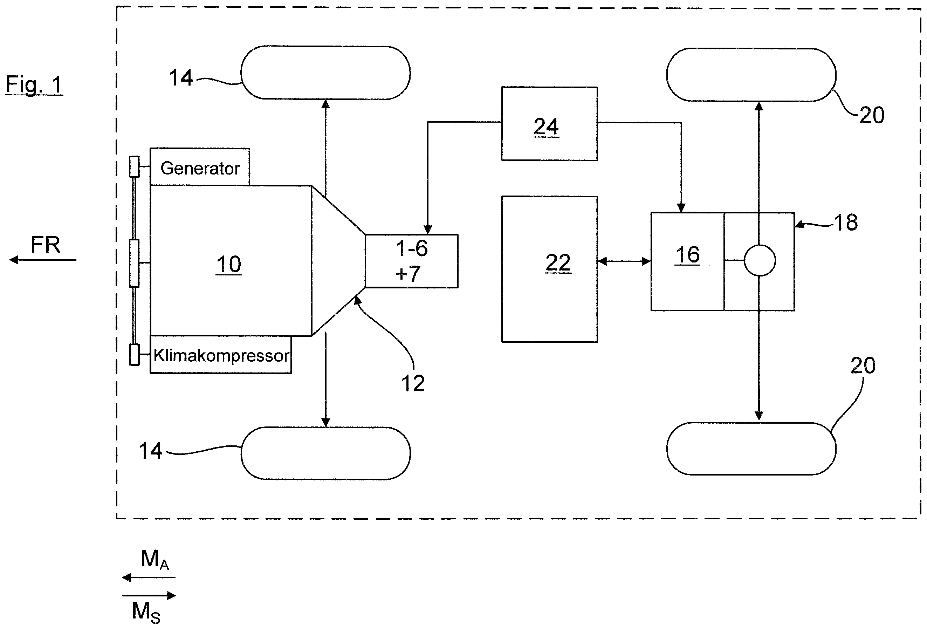

In der Fig. 1 ist grob skizziert eine Antriebsvorrichtung für ein hybridgetriebenes Kraftfahrzeug dargestellt, mit einer Brennkraftmaschine 10, einem Getriebe 12 mit einem integrierten Differenzial (nicht dargestellt), das auf die Vorderräder 14 des Kraftfahrzeugs abtreibt.

Ferner weist die Antriebsvorrichtung als zweite Antriebsquelle eine Elektromaschine 16 auf, die über ein nur angedeutetes Differenzial 18 die Hinterräder 20 des Kraftfahrzeugs antreibt.

Die als Motor oder als Generator schaltbare Elektromaschine 16 wird über eine im Kraftfahrzeug angeordnete Traktionsbatterie 22 mit Strom versorgt, wobei die Steuerung unter anderem der Schaltvorgänge im Getriebe 12 und der Elektromaschine 16 über ein elektronisches Steuergerät 24 erfolgt, das in an sich bekannter Weise sowohl motorspezifische (Lastanforderung, Drehzahl, etc.) als auch fahrspezifische Daten (Geschwindigkeit, Bremsbetätigung, etc.) auswertet.

Das Getriebe 12 ist hier beispielhaft ein Automatikgetriebe (zum Beispiel ein Doppelkupplungsgetriebe oder ein mit Planetenradsätzen gebildetes Automatikgetriebe), das sechs Vorwärtsgänge 1 - 6 (Fahrgänge) und eine weitere Übersetzungsstufe aufweist, die einen Schubgang 7 bereitstellt.

Die Fahrgänge 1 - 6 sind in ihren Übersetzungen als Anfahrgang 1, als Zwischengänge 2 - 5 und gegebenenfalls als Economygang 6 ausgelegt, wobei im Fahrgang 5 die Endgeschwindigkeit des Kraftfahrzeugs erreicht wird, während der E-Gang 6 eine Drehzahlabsenkung der Brennkraftmaschine 10 im höheren Geschwindigkeitsbereich bewirkt.

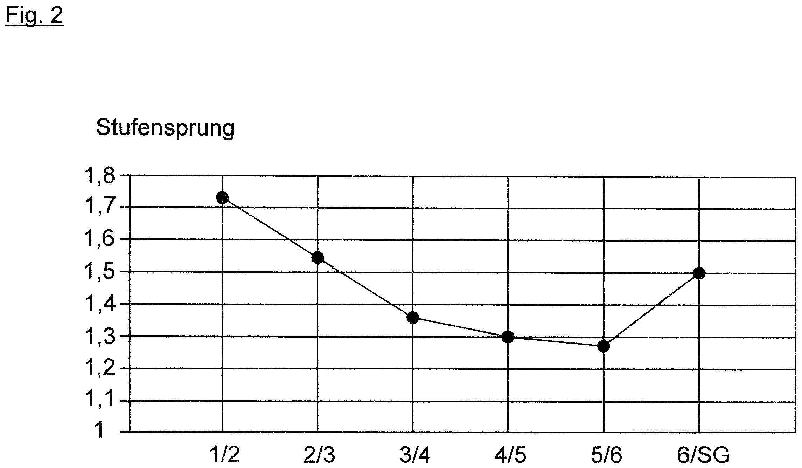

Der Schubgang 7 hingegen ist so ausgelegt, dass er im höheren Geschwindigkeitsbereich des Kraftfahrzeugs die Drehzahl der Brennkraftmaschine 10 bei Schubbetrieb im Wesentlichen bis auf eine Leerlaufdrehzahl absenkt, wobei die Leerlaufdrehzahl bevorzugt oberhalb einer Grenzdrehzahl liegen soll, in der die Kraftstoffzufuhr zur Brennkraftmaschine 10 wieder aufgenommen wird. Gegenständlich ausgeführt kann der Schubgang 7 ein entsprechend übersetzter Planetenradsatz oder ein Zahnradsatz des Getriebes 12 sein. Es sind jedoch alle Möglichkeiten der Ausführung denkbar, die zu dem in der Fig. 2 dargestellten Diagramm führen.

Die Fig. 2 zeigt ein Diagramm mit den Gangabstufungen des Getriebes 12. Üblicherweise ist der Stufensprung, der als Quotient eines Gangs zum nächsthöheren Gang (zum Beispiel ϕ_{1/2} = i1/i2) definiert ist, umso größer, je niedriger die Gänge sind und pendelt sich bei den hohen Gängen häufig in einer Waagrechten ein; die Gangabstufungen können aber auch im Wesentlichen linear (gleichmäßig) sein. Bei der Auslegung der Übersetzungsstufen im Getriebe 12 ist es von Relevanz, dass die Stufensprünge über der Geschwindigkeit des Kraftfahrzeugs und abgestimmt auf die Leistungskurve der Brennkraftmaschine 10 ein harmonisches Umschalten von einer Übersetzungsstufe zur anderen herstellen.

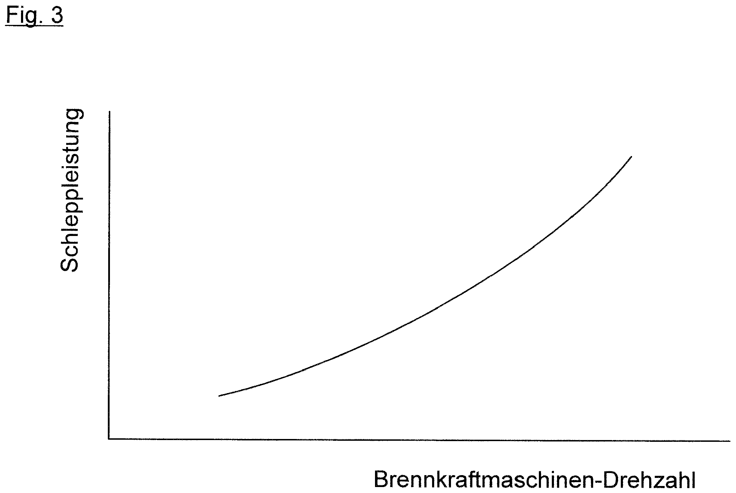

Wie das Diagramm zeigt, ist der Stufensprung von 6 (gegebenenfalls E-Gang) auf den Schubgang 7 deutlich größer als die einzelnen Stufensprünge der Fahrgänge 1 - 6 und stellt durch die entsprechende Getriebeübersetzung sicher, dass im Schubbetrieb die Drehzahl der Brennkraftmaschine 10 stark abgesenkt wird und diese nur noch ein geringes Schleppmoment Ms ausüben kann, das einem Antriebsmoment M_{A} entgegenwirkt (Fig. 1). Die Abhängigkeit der Größe des Schleppmoments Ms von der Brennkraftmaschinen-Drehzahl ist in dem Diagramm aus der Fig. 3 veranschaulicht, wonach mit reduzierter Brennkraftmaschinen-Drehzahl auch das Schleppmoment geringer wird. Daraus resultiert umgekehrt, dass der Schubgang 7 keinen zum Antrieb des Kraftfahrzeugs dienenden Fahrgang bildet und demzufolge automatisiert nur bei Schubbetrieb aktiviert wird, nicht jedoch in einem Zugbetrieb des Fahrzeugs, bei dem das Fahrzeug von der Brennkraftmaschine angetrieben wird.

Im Fahrbetrieb des Kraftfahrzeugs treiben entweder die Brennkraftmaschine 10 und/oder die Elektromaschine 16 das Kraftfahrzeug an. Treibt nur die Elektromaschine 16 an, so kann über das Steuergerät 24 ein Gang bis hin zum Schubgang eingestellt werden, bei dem die Brennkraftmaschine 10 im Wesentlichen auf Leerlaufdrehzahl eingestellt wird und bei dem keine Kraftstoffeinspritzung erfolgt, die von der Brennkraftmaschine 10 angetriebenen Zusatzaggregate aber in Funktion bleiben.

Bei einer höheren Geschwindigkeit des Kraftfahrzeugs mit zugeschalteter Brennkraftmaschine 10 wird bei einem erkannten Schubbetrieb eine Schubhochschaltung der Gänge oder der Schubgang 7 geschaltet, der die Drehzahl der Brennkraftmaschine 10, wie vorbeschrieben, im Wesentlichen auf Leerlaufdrehzahl absenkt.

Im Bremsbetrieb des Kraftfahrzeugs (erkannt unter anderem über ein Bremssteuergerät oder eine Bremspedalbetätigung) wird dabei zusätzlich die Elektromaschine 16 als Generator geschaltet und fördert im Rekuperationsbetrieb mehr oder weniger Strom zur Traktionsbatterie 22.

Wird zum Beispiel über ein Gaspedal wieder eine Leistungsanforderung gesteuert, so wird geschwindigkeitsabhängig ein Fahrgang im Getriebe 12 eingelegt und die Brennkraftmaschine 10 durch wieder erfolgende Kraftstoffzufuhr entsprechend aktiviert.

Die Erfindung ist nicht auf das dargestellte Ausführungsbeispiel beschränkt. Alternativ dazu können auch zwei Schubgänge vorgesehen sein, die über einen dann vergrößerten Geschwindigkeitsbereich des Kraftfahrzeugs die Motordrehzahl im Leerlaufbereich sicherstellen.

Gegebenenfalls kann über das Steuergerät 24 die Gangauswahl so ausgelegt sein, dass die Leerlaufdrehzahl der Brennkraftmaschine 10 stets oberhalb einer definierten Grenzdrehzahl liegt, um eine nicht erwünschte Kraftstoffzufuhr zu unterbinden. Zudem kann diese Grenzdrehzahl auch noch definiert reduziert werden.

Die beschriebene Antriebsvorrichtung als solche ist nur beispielsweise. Die Elektromaschine 16 kann in an sich bekannter Weise auch an anderer Stelle positioniert sein (zum Beispiel bei einem Standardantrieb auf einer Kardanwelle). Zu beachten ist jedoch, dass im Schubgang 7 nur die Drehzahl der Brennkraftmaschine 10, nicht aber die Drehzahl der Elektromaschine 16 abgesenkt wird.

## Patentansprüche

1. Hybridgetriebenes Kraftfahrzeug mit einer Antriebsvorrichtung mit einer Brennkraftmaschine (10), die auf ein Getriebe (12) abtreibt, das eine Anzahl von Übersetzungsstufen aufweist, die in einem Zugbetrieb, in dem das Fahrzeug von der Brennkraftmaschine (10) angetrieben wird, schaltbare Fahrgänge (1 bis 6) bereitstellt, und zwar von einem Anfahrgang (1) bis zu einem höchsten Fahrgang (6), und mit einer antreibenden Elektromaschine (16) als zweite Antriebsquelle, **dadurch gekennzeichnet, dass** das Getriebe (12) zumindest eine, einen Schubgang (7) bereitstellende Übersetzungsstufe aufweist, die im Zugbetrieb nicht vom Getriebesteuergerät aktiviert wird, sondern nur in einem Schubbetrieb, in dem das Fahrzeug die Brennkraftmaschine (12) schleppt, dass ein Quotient der Übersetzung (i) eines der im Zugbetrieb schaltbaren Fahrgänge (1 bis 6) zur Übersetzung (i) des nächsthöheren, im Zugbetrieb schaltbaren Fahrganges (1 bis 6) einen Stufensprung (ϕ) definiert, und dass das Getriebe (12) so ausgelegt ist, dass die Stufensprünge (ϕ) kleiner werden, umso höher die Fahrgänge (1 bis 6) sind, dass der Stufensprung (ϕ_{6/7}) zwischen dem höchsten Fahrgang (6) und dem Schubgang (7) zumindest größer ist als der Stufensprung (ϕ_{5/6}) vom zweithöchsten Fahrgang (5) auf den höchsten Fahrgang (6), und dass der Schubgang (7) zumindest dann geschaltet wird, wenn bei entsprechender Geschwindigkeit das Kraftfahrzeug über die Elektromaschine (16) im Rekuperationsbetrieb gebremst wird.

2. Hybridgetriebenes Kraftfahrzeug nach Anspruch 1, **dadurch gekennzeichnet, dass** die Größe des Schleppmoments (M_{S}) abhängig von der Brennkraftmaschinen-Drehzahl ist, das heißt dass je geringer die Motordrehzahl ist, desto geringer ein Schleppmoment (M_{S}) ist, und dass zur Reduzierung des im Schubbetrieb generierten Schleppmoments (M_{S}) der Schubgang (7) eine größere Übersetzung aufweist als der höchste, im Zugbetrieb schaltbare Fahrgang (6).

3. Hybridgetriebenes Kraftfahrzeug nach Anspruch 1 oder 2, **dadurch gekennzeichnet, dass** im Schubbetrieb bei geschaltetem Schubgang (7) die Brennkraftmaschinen-Drehzahl mittels einer Motorsteuerung bis auf eine Brennkraftmaschinen-Leerlaufdrehzahl oder darunter absenkbar ist.

4. Antriebsvorrichtung nach einem der vorhergehenden Ansprüche, **dadurch gekennzeichnet, dass** eine oder mehr als eine, nicht als Fahrgang, sondern als Schubgang verwendbare Übersetzungsstufe bereitgestellt ist, die geschwindigkeitsabhängig so geschaltet wird, dass die Drehzahl der Brennkraftmaschine (10) im Schubbetrieb bis auf die Leerlaufdrehzahl oder darunter absenkbar ist.

## Claims

1. Hybrid-driven motor vehicle having a drive device having an internal combustion engine (10) which outputs onto a gearbox (12) which has a number of translation steps which in a traction mode, in which the vehicle is driven by the internal combustion engine (10), provides switchable driving gears (1 to 6), namely from a start gear (1) as far as a highest driving gear (6), and having a driving electric machine (16) as a second drive source, **characterised in that** the gearbox (12) has at least one translation step providing a thrust gear (7), which translation step is not activated by the gearbox control device in traction mode, but rather only in a thrust mode in which the vehicle drags the internal combustion engine (12), that a quotient of the translation (i) of one of the driving gears (1 to 6) which can be switched in the traction mode to the translation (i) of the next higher driving gear (1 to 6) which can be switchable in the traction mode defines a progressive ratio (φ), and that the gearbox (12) is configured such that the progressive ratios (φ) become smaller, the higher the driving gears (1 to 6) are, that the progressive ratio (φ_{6/7}) between the highest driving gear (6) and the thrust gear (7) is at least greater than the progressive ratio (φ_{5/6}) from the second-highest driving gear (5) to the highest driving gear (6), and that the thrust gear (7) is switched at least at the point at which, at an appropriate speed, the vehicle is braked in recuperation mode via the electric machine (16).

2. Hybrid-driven motor vehicle according to claim 1, **characterised in that** the size of the drag torque (M_{S}) is a function of the rotational speed of the internal combustion engine, that is, that the lower the rotational speed of the motor is, the lower a drag torque (M_{S}) is, and that for reducing the drag torque (M_{S}) generated in thrust mode, the thrust gear (7) has a greater translation than the highest driving gear (6) which can be switched in traction mode.

3. Hybrid-driven motor vehicle according to claim 1 or 2, **characterised in that** in thrust mode, when thrust gear is selected (7), the rotational speed of the internal combustion engine can be reduced by means of a motor controller to an idling speed of the internal combustion engine, or lower.

4. Drive device according to any of the preceding claims, **characterised in that** one or more than one translation step is provided which can be used not as a driving gear but rather as a thrust gear, which is switched depending on speed such that the rotational speed of the internal combustion engine (10) in thrust mode can be reduced to the idling speed or lower.

## Revendications

1. Véhicule automobile à propulsion hybride avec un dispositif d'entraînement moteur avec un moteur à combustion interne (10) qui entraîne une transmission (12), qui présente un certain nombre d'étages de démultiplication, qui, dans une mode traction dans lequel le véhicule est entraîné par le moteur à combustion interne (10), fournit des rapports de transmission (1 à 6) pouvant être enclenchés, à savoir d'un rapport de démarrage (1) à un rapport de transmission le plus élevé (6), et avec une machine électrique d'entraînement (16) comme deuxième source d'entraînement, **caractérisé en ce que** la transmission (12) présente au moins un rapport de poussée (7) fournissant un étage de démultiplication qui n'est pas activé par l'unité de commande de transmission en mode de traction, mais uniquement en mode de poussée, dans lequel le véhicule entraîne le moteur à combustion interne (12), **en ce qu'**un quotient de la transmission (i) de l'un des rapports de transmission (1 à 6) pouvant être enclenchés en mode de traction par la transmission (i) du rapport de transmission (1 à 6) immédiatement supérieur pouvant être enclenché en mode de traction définit un incrément (ϕ), et **en ce que** la transmission (12) est conçue de sorte que plus les rapports de transmission (1 à 6) sont élevés, plus les incréments (ϕ) sont réduits, **en ce que** l'incrément (ϕ_{6/7}) entre le rapport de transmission le plus élevé (6) et le rapport de poussée (7) est au moins supérieur à l'incrément (ϕ_{5/6}) du deuxième rapport de transmission le plus élevé (5) au rapport de transmission le plus élevé (6), et **en ce que** le rapport de poussée (7) est enclenché au moins lorsque le véhicule est freiné par la machine électrique (16) en mode de récupération à la vitesse correspondante.

2. Véhicule automobile à propulsion hybride selon la revendication 1, **caractérisé en ce que** l'amplitude du couple à la décélération (M_{S}) dépend du régime de moteur à combustion interne, c'est-à-dire que plus le régime moteur est faible, plus le couple à la décélération (M_{S}) est faible, et **en ce que** pour réduire le couple à la décélération (M_{S}) généré en mode de poussée, le rapport de poussée (7) présente une transmission plus élevée que le rapport de transmission le plus élevé (6) pouvant être enclenché en mode de traction.

3. Véhicule automobile à propulsion hybride selon la revendication 1 ou 2, **caractérisé en ce que**, en mode de poussée avec le rapport de poussée (7) enclenché, le régime de moteur à combustion interne peut être réduit à ou sous un régime de ralenti de moteur à combustion interne au moyen d'une commande moteur.

4. Dispositif d'entraînement moteur selon l'une quelconque des revendications précédentes, **caractérisé en ce qu'**un ou plusieurs étages de démultiplication utilisable non pas comme rapport de transmission, mais comme rapport de poussée, qui est enclenché en fonction de la vitesse de sorte que le régime du moteur à combustion interne (10) est en mode de poussée jusqu'au régime de ralenti ou peut être réduit en dessous.
